Europäisches Patentamt

European Patent Office

Office européen des brevets

(19)

(11) Veröffentlichungsnummer: **0 013 692**
**B1**

## (12) EUROPÄISCHE PATENTSCHRIFT

(45) Veröffentlichungstag der Patentschrift:
24.03.82

(51) Int. Cl.³: **C 22 B 7/00**

(21) Anmeldenummer: **79103986.0**

(22) Anmeldetag: **16.10.79**

(54) **Vorrichtung zum selektiven Abtrennen nicht ferromagnetischer Metalle aus einem Gemenge zerkleinerten metallischen Schrotts von nahezu einheitlicher Teilchengrösse.**

(30) Priorität: **21.12.78 DE 2855239**
**28.04.79 DE 2917316**

(43) Veröffentlichungstag der Anmeldung:
**06.08.80 Patentblatt 80/16**

(45) Bekanntmachung des Hinweises auf die Patenterteilung:
**24.03.82 Patentblatt 82/12**

(84) Benannte Vertragsstaaten:
**AT BE CH FR GB IT LU NL SE**

(56) Entgegenhaltungen:
**AT-B-290 147**
**DE-A1-2 709 515**
**DE-A1-2 800 224**
**DE-C-805 087**
**DE-C-626 944**
**US-A-1 669 485**
**US-A-3 215 421**
**US-A-3 550 925**
**US-A-3 558 304**

(73) Patentinhaber: **sma Shredder-Müll Aufbereitung Schrott Maschinen Abbruch GmbH, Geisseestrasse 43, D-8500 Nürnberg (DE)**

(72) Erfinder: **Weiss, Karl, Kirchenweg 20, D-8501 Altenberg (DE)**

(74) Vertreter: **Eitel, Alfred, Dr. et al, Patentanwälte Dipl.-Ing. Dr. Alfred Eitel Dipl.-Ing. Dipl.-Ldw. Ernst Czowalla Dipl.-Phys. Peter Matschkur Königstrasse 1, D-8500 Nürnberg (DE)**

ACTORUM AG.

## Vorrichtung zum selektiven Abtrennen nicht ferromagnetischer Metalle aus einem Gemenge zerkleinerten metallischen Schrotts von nahezu einheitlicher Teilchengrösse

Die Erfindung richtet sich auf eine Vorrichtung zum selektiven Abtrennen nicht ferromagnetischer Metalle aus einem Gemenge zerkleinerten metallischen Schrottes von nahezu einheitlicher Teilchengrösse mit einer Zuführeinrichtung, die in ein Wärmebad zum Ausschmelzen niedrigschmelzender Bestandteile führt und einer aus dem Wärmebad herausführenden Austragseinrichtung.

Ein derartiges Gemenge entsteht bei der Verarbeitung von sogenanntem Shredder-Schrott, wobei der Schrott zerkleinert wird, während verschiedener Verfahrensabschnitte zunächst nichtmetallische Bestandteile entfernt und anschliessend ferromagnetische Bestandteile auf magnetischem Wege aussortiert werden, und schliesslich durch eine Folge von Gemengebestandteile bestimmter Grösse aussondernder Massnahmen ein Gemenge von Teilchen relativ einheitlicher Grösse erhalten wird.

Solche Gemenge waren bisher, insbesondere wenn sie aus Teilchen relativ geringer Grösse bestanden, kaum gewinnbringend verkäuflich, da ihr Bleianteil aufgrund der vorausgegangenen Trennschritte unverhältnismässig hoch ist und die Trennung der verschiedenen im Gemenge enthaltenen Metalle, vor allem Blei, Zink, Aluminium und Kupfer bzw. Kupfer und Zink in Form von Messing, nicht wirtschaftlich durchgeführt werden konnte oder die dabei erhaltenen Endmaterialien einen für eine wirtschaftliche Nutzung nicht ausreichenden Reinheitsgrad aufwiesen. Diese Gemenge wurden deshalb allenfalls als minderwertige Zuschlagstoffe verwendet. Im Hinblick auf die zunehmende Industrialisierung und die damit verbundene, immer stärker werdende Rohstoffknappheit auf der Erde nimmt auch die Bedeutung eines konsequenten Recycling entsprechend zu, d.h. es wird immer notwendiger und damit auch rentabler, Reinmetalle aus jeder Form von Altmaterial zurückzugewinnen.

Es sind nun bereits verschiedene Verfahren und Vorrichtungen bekannt, um insbesondere bei aus grösseren Teilen bestehenden Schrottgemengen bestimmte Metalle zu gewinnen. So wird z.B. versucht, mit Hilfe von Wärmestrahlung, u.U. auch abgestuft je nach der Schmelztemperatur des zu gewinnenden Metalls, bestimmte Metalle aus dem Gemenge herauszuschmelzen. Abgesehen davon, dass hierbei in Verbindung mit dem Luftsauerstoff giftige Metalloxyde entstehen können, ist der Reinheitsgrad der damit erhaltenen Metalle äusserst unbefriedigend, da stets ein Rest des ausgeschmolzenen Metalls als Überzug auf dem etwa zu gewinnenden NE-Metall verbleibt.

Probleme ergaben sich auch bei bekannten Vorrichtungen, bei denen das Gemenge in ein Bad mit einer höheren Temperatur als das auszuschmelzende Metall eingebracht wird, da auch hier die Trennung des ausgeschmolzenen Metalls vom bleibenden Gemenge nur unzureichend möglich ist. Ein derartiges Vorgehen ist aus der AT-A 290 147 bekannt, wo zum Ausschmelzen von Blei aus bleihaltigem Schrott ein Bleibad, eine Salzschmelze oder flüssige organische Verbindungen benutzt werden. Die dort beschriebene Vorrichtung arbeitet zwar auch kontinuierlich, jedoch erfolgt der Austrag nicht mit der für einen grossen Durchsatz erforderlichen Zuverlässigkeit und unter Abstreifung der Schmelze. Darüber hinaus ist es dort nicht möglich, in einem Arbeitsgang mehrere Metalle zu separieren.

Ausgehend von diesem Stand der Technik ist es die Aufgabe der Erfindung, eine Vorrichtung zu schaffen, die kontinuierlich arbeitend bei grosser Durchsatzmenge eine zuverlässige Trennung der nichtferromagnetischen metallischen Bestandteile von Schrottgemengen erlaubt, und zwar vor allem auch dann, wenn die Teilchengrösse des Gemenges verhältnismässig klein ist. Dabei soll der erforderliche finanzielle Aufwand so gering gehalten werden, dass für die erhaltenen Metalle auch bei der derzeitigen Marktlage konkurrenzfähige Herstellungskosten entstehen, wobei in diesem Zusammenhang auch den immer strenger werdenden Anforderungen an die Umweltfreundlichkeit solcher technischer Verfahren Rechnung getragen werden soll.

Dieses Ziel wird erreicht bei einer Vorrichtung der eingangs genannten Art, welche sich dadurch auszeichnet, dass die Austragsöffnung der aus dem Wärmebad, dessen Temperatur oberhalb des Schmelzpunktes von Blei liegt, herausführenden, als Schneckenfördereinrichtung ausgebildeten, Austragseinrichtung über eine Zufuhrleitung mit einem dem ersten Wärmebad nachgeschalteten Wärmebad, dessen Temperatur oberhalb des Schmelzpunktes von Zink liegt, verbunden ist, dass in dem Wärmebad Zuführ- und als Schneckenfördereinrichtung ausgebildete Austragseinrichtungen angeordnet sind, und dass eine weitere Fördereinrichtung vorgesehen ist, die die restlichen festen Gemengebestandteile durch eine Wärmezone, deren Temperatur oberhalb des Schmelzpunktes von Aluminium liegt, fördert.

In weiterer Ausgestaltung der Erfindung weist die Zuführeinrichtung eine Rütteleinrichtung auf. Diese Rütteleinrichtung kann z.B. an einem geneigten, einen Vorratsbehälter mit dem Wärmebad verbindenden Zuführkanal angreifen, wobei durch Einstellung von Frequenz und Amplitude der Rütteleinrichtung die Durchsatzmenge des zu transportierenden Gemenges sehr gut dosiert werden kann. Darüber hinaus können die Rüttelbewegungen auch auf die Schneckenfördereinrichtung übertragen werden, so dass durch die Vibrationen das vor allem durch die Mischbewegung der Schnecke bewirkte Loslösen von ausgeschmolzenen Metalltropfen unterstützt wird.

Vorteilhafterweise wird die Erfindung so verwirklicht, dass die Zuführeinrichtung in ein in das erste Wärmebad mündendes, mit Öffnungen zur Badflüssigkeit versehenes, endseitig geschlossenes Rohr austrägt. Durch dieses nach einem weiteren Merkmal der Erfindung schräg in die Badoberfläche eintauchende Rohr gelangt das Gemenge entweder selbständig oder unterstützt durch die Bewegungen der Rütteleinrichtung in das Wärmebad, wo der Ausschmelzvorgang stattfindet. Durch den endseitigen Abschluss des Rohres wird verhindert, dass das Gemenge in den das Wärmebad aufnehmenden Behälter austritt, wobei aber durch die Durchlassöffnungen gewährleistet ist, dass im Inneren des Rohres das gleiche Badniveau aufrechterhalten wird wie aussen.

Als besonders vorteilhaft erweist es sich, dass das Rohr am Aussenmantel ein Schneckenband trägt, das in einem mit Durchlassöffnungen für die Badflüssigkeit versehenem Aussenrohr läuft. Die erfindungsgemässe Schneckenfördereinrichtung ist also bei dieser Ausführungsform besonders material- und raumsparend mit der Zuführeinrichtung kombiniert. Aufgrund der Durchlassöffnungen ist innerhalb des Aussenrohrs das Badniveau das gleiche wie im Aussenraum.

Hierbei erweist es sich als günstig, dass das innenliegende Rohr vor der letzten Schneckenwindung des Schneckenbandes endet bzw. Auslassöffnungen aufweist. Das zugeführte Gemenge tritt also aus dem inneren Rohr in das äussere Rohr aus, wobei es noch im inneren Rohr in die Badflüssigkeit eintaucht. Durch die Anordnung des Auslasses für das Gemenge ist gewährleistet, dass alle festen Gemengebestandteile sicher aus dem Bad entfernt werden, ohne dabei mit der sich an der Endseite im Inneren des Aussenrohrs ansammelnden Metallschmelze in Kontakt zu kommen.

In weiterer Ausgestaltung der Erfindung ist das Schneckenband mit geringem Spiel von dem Aussenrohr umschlossen. Auf diese Weise werden zwar die festen Gemengebestandteile zuverlässig aus dem Bad befördert, andererseits ist es dem unter dem Einfluss der Mischbewegung der Schnecke vom Gemenge abgeschmolzenen Metall möglich, nach unten zum Ende des Aussenrohrs zu fliessen.

Eine vorteilhafte Alternative sieht vor, dass das Schneckenband mit einem lediglich dessen freie Drehbarkeit gewährleistenden Spiel von dem Aussenrohr umschlossen und die Aussenkante des Schneckenbandes mit einer Vielzahl von Ausnehmungen versehen ist. Hierdurch wird das freie Rückfliessen des flüssigen Metalls ermöglicht und gleichzeitig die ggf. denkbare Gefahr beseitigt, dass feste Gemengeteile zwischen Aussenrohr und Schneckenband eingeklemmt werden.

Vorteilhafterweise ist im Endbereich des Aussenrohrs ein Auslass für das ausgeschmolzene Metall vorgesehen. Dieser Auslass ist dabei so angeordnet, dass er im Endbereich möglichst tief liegt und so das Ablassen der sich dort ansammelnden Metallschmelze ermöglicht. Es erweist sich hierbei als günstig, dass der Auslass bzw. dessen Verlängerung verschliessbar ist, weil das Metall dann erst nach Erreichen eines gewissen Pegels abgestochen werden kann und somit aufgrund seiner grösseren Dichte praktisch frei von Badflüssigkeit erhalten wird. Durch die Verschliessbarkeit des Auslasses kann darüber hinaus das abgezogene Metall auch in Barren gegossen werden.

Besondere Anforderungen hinsichtlich der Erhitzbarkeit sind an das Wärmebad zu stellen. Zum Ausschmelzen von Blei (Siedepunkt 327 °C) wird deshalb ein Öl-Wärmebad aus einem Benzolsulfonat-Gruppen enthaltendem Öl, vorzugsweise Marlotherm-Öl, verwendet.

Trotz der Verwendung eines derartigen hocherhitzbaren Öls verdampft in Anbetracht der hohen Arbeitstemperaturen ein nicht unerheblicher Teil des Ölbades. Es ist deshalb erfindungsgemäss für das verdampfende Öl ein Kondensator und eine den Kreislauf schliessende Rückleitung und für die verbleibende Bad-Abluft eine Zuführleitung zum Brenner vorgesehen. Auf diese Weise wird nicht nur eine Umweltbelastung durch Öldämpfe weitgehend vermieden, sondern auch das teure Öl, ggf. unter zusätzlicher Verwendung einer Pumpe, wieder zurückgewonnen.

Mit besonderem Vorteil ist im Bereich der Zuführeinrichtung eine durch die heissen Brenner-Abgase beheizte Vorwärmezone für das zugeführte Gemenge angeordnet. Es wird somit die zugeführte Wärmeenergie besser ausgenutzt, da durch die Vorwärmung des Gemenges die Abkühlung des Bades geringer ist. Darüber hinaus wird ggf. von den Vorprozessen am Gemenge haftendes Wasser entfernt.

Als besonders vorteilhaft erweist es sich, dass auch die Zuführeinrichtung eine Förderschnecke umfasst. Dadurch entfällt die Notwendigkeit der Schrägstellung der Zuführ-Förderwege und es wird ein sicherer und definierter Materialtransport erreicht. Die Anordnung kann dabei vorteilhafterweise so getroffen werden, dass die zuführende Schnecke konzentrisch zur vorzugsweise einen mit dieser gemeinsamen Antrieb aufweisenden, austragenden Schnecke angeordnet ist. Diese Ausgestaltung ermöglicht einen kompakten, platzsparenden Aufbau, der sich nicht zuletzt deshalb besonders günstig bemerkbar macht, als der zu beheizende Raum verhältnismässig gering gehalten wird.

Erfindungsgemäss lässt sich die beschriebene Anordnung insbesondere so verwirklichen, dass ein eine erste Förderschnecke aufnehmendes Zuführrohr mit einer Einlassöffnung und einer an der Rohrunterseite angeordneten Austrittsöffnung zur Badflüssigkeit, eine weitere, wenigstens teilweise in die Badflüssigkeit eingreifende, am Aussenmantel des Zuführrohrs angeordnete zweite äussere Förderschnecke zur Weiterbewegung des Gemenges im Bad, eine Austragsanordnung für das Gemenge aus dem Bad ins Innere der Verlängerung des Zuführrohrs und eine weitere Schnecke im Inneren der Verlängerung des Zuführrohrs zur Weiterbeförderung des Gemenges vorgesehen sind. Das Gemenge wird also durch eine erste Schnecke in den Wärmebad-Behälter geführt, fällt nach Passieren der ersten Windung der äusseren Schnecke in die Badflüssigkeit und wird dort von der äusseren Schnecke unter gründlicher Durchmischung, d.h. so, dass die Badflüssigkeit auf alle Flächen der Gemengeteile gut einwirken kann, weiterbefördert und schliesslich durch die Austragseinrichtung wieder zurück auf die ursprüngliche Förderebene gebracht und aus dem Wärmebadbehälter hinausbefördert.

Die Austragsanordnung wird vorteilhafterweise so verwirklicht, dass sie wenigstens eine an der Verlängerung des Zuführrohrs befestigte, sich etwa in Längsrichtung des Zuführrohrs erstreckende Schaufel und eine in Drehrichtung gesehen oberhalb derselben angeordnete Öffnung umfasst. Das in Förderrichtung gesehen sich am Ende des Bades ansammelnde Gemenge wird durch diese Schaufel, von der selbstverständlich auch mehrere gleichartige vorgesehen sein können, vom Boden des Badbehälters abgehoben und nach etwa einer 90°-Drehung durch die Öffnung ins Innere der Verlängerung des Zuführrohrs befördert, wo es von der dort liegenden Schnecke erfasst wird.

Günstigerweise sind in und an der letzten Schneckenwindung der äusseren Förderschnecke vor der rückwärtigen Stirnwand des Badbehälters Ausnehmungen und in Drehrichtung gesehen davorliegende, schräg zur Schneckenwindungsfläche angeordnete Schaufelansätze vorgesehen. Hierdurch wird verhindert, dass an dieser rückwärtigen Stirnwand ein Materialstau entsteht, wenn durch die Austragseinrichtung nicht sämtliches Material bereits vorher in das innere Rohr befördert wird. Durch die Ausnehmung gelangt das Gemenge wieder auf die Schaufel der Austragsvorrichtung bzw. in den Arbeitsbereich dieser Schaufel und wird somit ebenfalls aus dem Bad entfernt.

Zur Vervollkommnung der Erfindung ist mit besonderem Vorteil vorgesehen, dass der Heizbrenner für das Wärmebad derart angeordnet ist, dass im Bereich der aus dem Wärmebad herausführenden Verlängerung des Zuführrohrs eine die Temperatur des Wärmebads übersteigende Zone zum Ausschmelzen höherschmelzender Metalle, wie z.B. Aluminium, entsteht. Wie bereits dargelegt, ist das Ausschmelzen durch direktes Erhitzen dann gefahrlos, wenn zuvor die giftige Oxyde bildenden Metalle entfernt wurden. Da für die Beheizung des Wärmebades, z.B. zum Ausschmelzen von Zink, ohnehin ein Brenner erforderlich ist, dessen Flammentemperatur über der gewünschten Badtemperatur liegt, ist es sehr günstig, diese Gebläseflamme auch zum Ausschmelzen von höherschmelzendem Aluminium (Schmelzpunkt 659°C) heranzuziehen, da hierbei kaum zusätzliche Energie verbraucht wird, andererseits aber ohne grossen weiteren Aufwand Aluminium gewonnen werden kann und gleichzeitig der Reinheitsgrad des Kupfers noch zunimmt.

Hierzu ist es vorteilhaft, dass in dem aus dem Wärmebad führenden Bereich der Verlängerung des Zuführrohrs durch Siebe abgedeckte, untenliegende Auslassöffnungen angeordnet sind. Die Siebe verhindern das Austreten der Kupfer-Gemengeteile, die aufgrund des höheren Schmelzpunktes des Kupfers (Schmelzpunkt 1083°C) fest bleiben, ermöglichen aber das Ausfliessen des abgeschmolzenen Aluminiums.

Zum Ausschmelzen insbesondere von Zink bewährt sich ein Wärmebad, das aus einer Schmelze von Zinkchlorid $ZnCl_2$ (Chlorzink) besteht. Zinkchlorid hat einen Schmelzpunkt von 365°C und einen Siedepunkt von 732°C, eignet sich also sehr gut zum Ausschmelzen des bei 419°C schmelzenden Zinks, ohne dass man hierbei in der Nähe des Siedepunktes arbeiten müsste. Ausserdem ist das Zinkchlorid gegenüber dem Badbehälter-Material nicht sehr aggressiv, was sich vor allem bei Dauerbetrieb als Vorteil erweist. Im Rahmen der Erfindung kann aber auch z.B. eine Schmelze des auszuschmelzenden Metalls als Badflüssigkeit Verwendung finden.

Zur Gewinnung des sich aufgrund seiner grösseren Dichte am Boden des Badbehälters absetzenden Metalls ist erfindungsgemäss vorgesehen, dass im Bodenbereich des Wärmebades eine verschliessbare Auslassöffnung vorgesehen ist. Die Verschliessbarkeit ermöglicht es wiederum abzuwarten, bis sich eine hinreichende Menge Metallschmelze am Boden gebildet hat und diese dann in jeweils benötigten Mengen abzulassen oder einen definierten kontinuierlichen Abfluss in einen Warmhalteofen unter Konstanthaltung des Spiegels des ausgeschmolzenen Metalls vorzusehen.

Weitere Merkmale, Einzelheiten und Vorteile der Erfindung ergeben sich aus der folgenden Beschreibung zweier bevorzugter Ausführungsformen sowie anhand der Zeichnung. Dabei zeigen:

Fig. 1 eine schematische Darstellung einer Ausführungsform der erfindungsgemässen Vorrichtung,

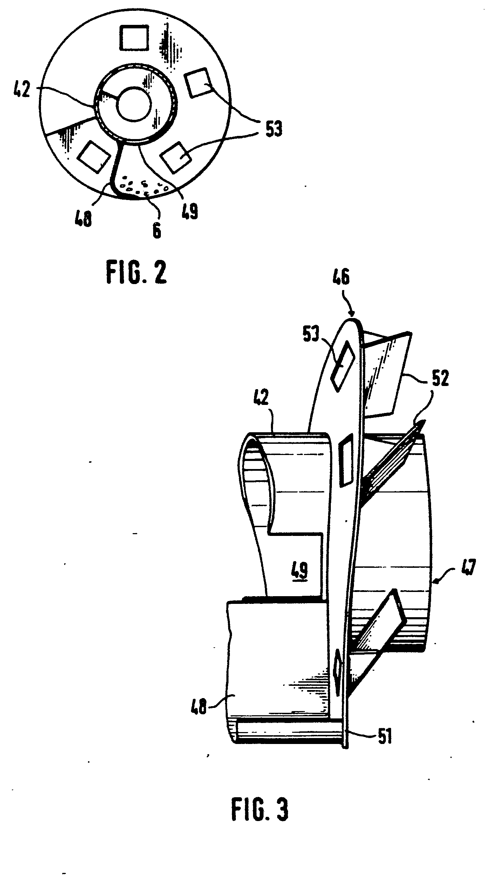

Fig. 2 einen Schnitt längs der Linie II–II in Fig. 1 und

Fig. 3 eine vergrösserte perspektivische Darstellung des Bereichs um die letzte Schneckenwindung der äusseren Schnecke der Austragsvorrichtung des zweiten Wärmebads.

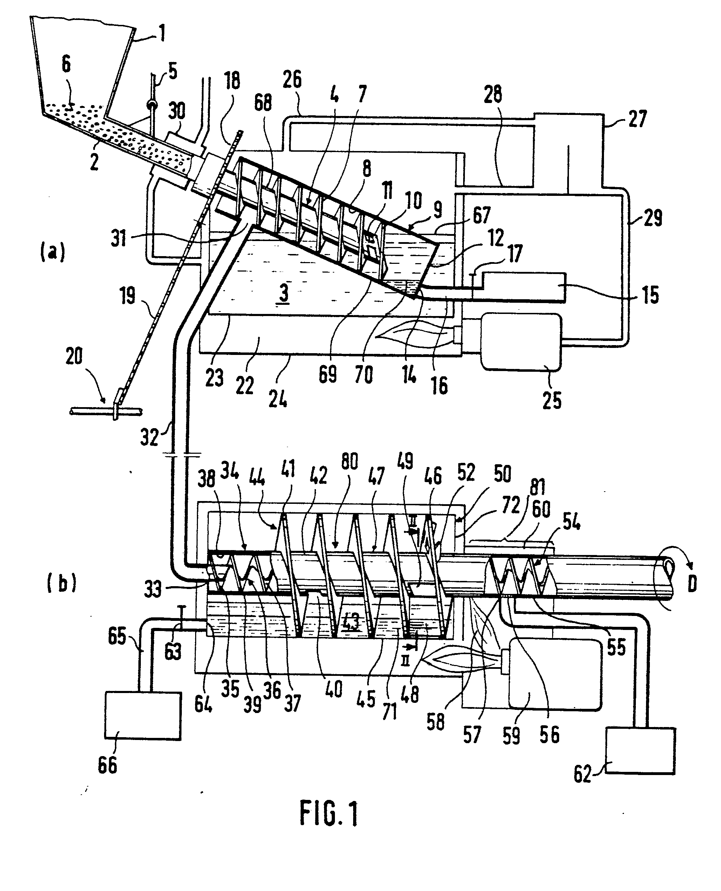

Der in Fig. 1 oben dargestellte Teil der erfindungsgemässen Vorrichtung ist im Ausführungsbeispiel zum Ausschmelzen von Blei aus einem Schrott-Gemenge ausgelegt, während der in Fig. 1 unten dargestellte Teil zum Ausschmelzen von Zink dient.

Bei der in Fig. 1 dargestellten Ausführungsform schliesst sich an den Vorratsbehälter 1 ein Zuführkanal 2 an, der in ein schräg in die Badflüssigkeit 3 führendes Rohr 4 mündet. Am Zuführkanal 2 greift eine im einzelnen nicht dargestellte Rütteleinrichtung 5 an, die die definierte Vorwärtsbewegung des in den Vorratsbehälter 1 eingefüllten Gemenges 6 gewährleistet.

Das schrägliegende Rohr 4 ist von einem Schneckenband 7 umgeben, das seinerseits mit einem gewissen Spiel an der Innenwand 8 eines koaxial verlaufenden Aussenrohres 9 anliegt. Das innere Rohr 4 weist vor der in Förderrichtung ersten unteren Schneckenwindung 10 Auslassöffnungen 11 auf, ist im übrigen aber endseitig verschlossen.

Das Aussenrohr 9 ist ebenfalls am unteren Ende verschlossen und mit Durchlässen 12 für die Badflüssigkeit versehen. An der tiefsten Stelle des endseitigen Abschlusses 13 des Aussenrohrs 9 ist ein Auslass 14 vorgesehen, an den sich eine in einen Vorratsbehälter 15 führende Leitung 16 anschliesst. Zwischen Auslass 14 und Vorratsbehälter 15 ist eine Verschlusseinrichtung 17 angeordnet.

Das Schneckenband 7 wird über das innere Rohr 4 angetrieben, wobei die zum Motor führende, ein gross Zahnrad 18 übergreifende Antriebskette 19 und die übrigen Teile der Antriebseinrichtung 20 nur schematisch dargestellt sind.

Die Badflüssigkeit 3 wird von einem Behälter 21 aufgenommen, der doppelwandig, vorzugsweise aus Schamottesteinen, ausgebildet ist. Der Zwischenraum 22 zwischen innerer und äusserer Wandung 23 bzw. 24 wird von einem Öl-Gebläsebrenner 25 befeuert.

Die Öldämpfe des die Badflüssigkeit 3 bildenden Öls werden über eine Leitung 26 abgesaugt und gelangen in einen Kondensator 27, wo sie wieder verflüssigt und durch die Rückleitung 28 in das Bad geleitet werden. Die verbleibende Bad-Abluft wird über die Leitung 29 dem Brenner 25 als Verbrennungsluft zugeleitet. Die Brenner-Abgase aus dem Zwischenraum 22 werden einer im Bereich des Zuführkanals 2 angeordneten, diesen mantelartig umgebenden Vorheizzone 30 zugeführt und gehen dann zum Kamin.

Von der Unterseite des austragsseitigen, also oberen Endes des Aussenrohres 9 führt eine Auslassöffnung 31 und eine daran sich anschliessende Leitung 32 zu dem in Fig. 1 unten dargestellten, das Ausschmelzen von Zink vornehmenden erfindungsgemässen Vorrichtungsteil.

Die Leitung 32 durchsetzt die Eintrittsöffnung 33 eines Zuführrohres 34 und mündet vor der in Förderrichtung gesehen ersten Schneckenwindung 35 der im Zuführrohr 34 angeordneten Förderschnecke 36. Das Schneckenband 37 dieser Förderschnecke 36 kann mit dem Innenmantel 38 des Zuführrohres 34 verbunden sein und wird dementsprechend über dieses – wie im einzelnen nicht dargestellt – angetrieben. Der Bereich der ersten Schneckenwindungen 35, 39, 40 wirkt hierbei wiederum als eine Art Vorheizzone. Nach einigen Schneckenwindungen 35, 39, 40 ist das Zuführrohr 34 stirnseitig abgeschlossen und mit einer Austrittsöffnung 40 für das Gemenge 6 versehen. Diese Austrittsöffnung 40 liegt in Förderrichtung gesehen nach der ersten Windung 41 einer am Aussenmantel 42 des Zuführrohrs 34 angeordneten in das Salzbad 43 eingreifenden äusseren Förderschnecke 44.

Diese äussere Förderschnecke 44 ist so dimensioniert, dass sie etwa bis zum Badboden 45 reicht und eine Weiterbeförderung des dort befindlichen Materials ermöglicht. Sie taucht damit also wenigstens teilweise in das Bad 43 ein. Vor der in Förderrichtung gesehen letzten Schneckenwindung 46 der äusseren Schnecke 44 ist eine Austragsanordnung vorgesehen.

Die Austragsanordnung besteht im Ausführungsbeispiel aus einer an der Verlängerung 47 des Zuführrohrs 34 parallel zu dessen Längsachse befestigten, in Bewegungsrichtung vorgewölbten Schaufel 48, und einer in Drehrichtung D gesehen vor dieser Schaufel 48 liegenden Öffnung 49 in der Verlängerung 47 des Zuführrohrs 34. Um zu vermeiden, dass dasjenige Gemenge, welches von der Schaufel nicht erfasst wird, sich vor der rückwärtigen Stirnwand 49 des Badbehälters 50 staut, sind an der letzten Schneckenwindung 46 der äusseren Schnecke 44 der rückwärtigen Stirnwand 72 des Badbehälters 50 zugewandt schräg zur Oberfläche des Schneckenbandes 51 mehrere Schaufelansätze 52 angeordnet, wobei in Drehrichtung D gesehen vor jedem Schaufelansatz 52 eine Ausnehmung 53 im Schneckenband vorgesehen ist. Die Schaufelansätze 52 nehmen in den Bereich der rückwärtigen Stirnwand 49 gelangte Gemengeteile 6 auf und befördern sie bei weiterer Drehung in Richtung D der äusseren Schnecke 44 wieder zurück in den Raum vor deren letzter Windung 46.

Die Öffnung 49 der Verlängerung 47 des Zuführrohrs 34 liegt in Förderrichtung gesehen vor der ersten Windung einer im Inneren der Verlängerung 47 des Zuführrohrs 34 angeordneten Schnecke 54, die die Fortsetzung der am Eingang des Zuführrohrs 34 angeordneten Schnecke 36 darstellt. Längs des Förderweges dieser inneren Schnecke 54 ist ausserhalb des Badbehälters 50 im Boden 55 der Verlängerung 47 des Zuführrohrs 34 eine mit einem Sieb 56 abgedeckte Öffnung 57 vorgesehen, wobei dieser Bereich der Verlängerung 47 des Zuführrohrs 34 von den Flammen 38 des darunterliegenden, der Badbeheizung dienenden Brenners 39 direkt erreicht und entsprechend hoch aufgeheizt wird. Man erhält so im Anschluss an die als Ganzes mit 80 bezeichnete Austragsvorrichtung aus dem zweiten Wärmebad 43 eine Wärmezone 81. Auch dieser Bereich liegt ebenso wie der Badbehälter 50 innerhalb eines äusseren Schamottemantels 60. Die innere Schnecke 54 mündet in einer Austragsöffnung.

An die mit einem Sieb 56 abgedeckte Auslassöffnung 57 schliesst sich eine Rohrleitung 61 an, die zu einem Behälter 62 für das dort ausschmelzende Aluminium führt. Im Bodenbereich der Badwanne ist ausserdem ein mit einer Verschlussanordnung 63 versehener Auslass 64 vorgesehen, der über eine weitere Rohrleitung 65 zu einem Behälter 66 führt, der das abgezogene Zink aufnimmt.

Bei der Verwendung der erfindungsgemässen Vorrichtung gem. Fig. 1 läuft das Verfahren wie folgt ab:

Vom Vorratsbehälter 1 gelangt das Gemenge 6, das z.B. aus etwa 10 mm grossen Teilen aus Kupfer, Blei, Zink, Aluminium und Kupfer und Zink in Form von Messing besteht, über den Zuführkanal 2 aufgrund von dessen Schräglage und unterstützt durch die Rüttelbewegung der Rütteleinrichtung 5 in den Bereich der Vorheizzone 30. Dort wird das Gemenge 6 mit Hilfe der heissen Brenner-Abgase vorgewärmt und getrocknet. Es gelangt dann über das schräg in die Badoberfläche eintauchende innere Rohr 4 in die Badflüssigkeit 3, deren Spiegel 67 so hoch liegt, dass das Gemenge 6 bereits im Inneren des Rohres 4 von Badflüssigkeit 3 umspült wird. Durch das heisse Öl wird das im Gemenge 6 befindliche Blei ausgeschmolzen. Die verbleibenden festen Gemengebestandteile fallen durch die Öffnungen 11 des Rohres 4 vor die in Förderrichtung gesehen erste Schneckenwindung 10 des am Aussenmantel 68 des Rohrs 4 angebrachten Schneckenbandes 7 und werden unter guter Durchmischung längs des Bodens 69 des Aussenrohres 9 im Bad 3 nach oben befördert. Dabei wird auch das bis dahin noch nicht ausgeschmolzene Blei gründlich entfernt, welches sich am unteren Ende des Aussenrohres 9 sammelt. Sobald der Bleispiegel 70 eine gewisse Höhe erreicht hat, wird die zum Behälter 15 führende Verschlusseinrichtung 17 geöffnet und das Blei abgezogen.

Die verbleibenden Gemengteile 6 werden durch das Schneckenband 7 nach oben befördert und verlassen das Aussenrohr 9 durch die untenliegende Auslassöffnung 31 und gelangen über eine Leitung 32 zur nachgeschalteten, den zweiten Verfahrensschritt durchführenden Anordnung. Über die Eintrittsöffnung 33 an der Vorderseite des Zuführrohrs 34 gelangen die Gemengteile 6 vor die in Förderrichtung gesehen erste Schneckenwindung 35 der im Zuführrohr 34 angeordneten Schnecke 36. Durch die Austrittsöffnung 40 im Zuführrohr 34 fallen sie wiederum in Förderrichtung gesehen vor die erste Schnekkenwindung 41 der äusseren Schnecke 44 in die aus einer Schmelze von Zinkchlorid bestehende Badflüssigkeit 43. Von der äusseren Schnecke 44 werden sie wiederum unter guter Durchmischung in der Badflüssigkeit 43 entlangbewegt, wobei sämtliches ausschmelzbares Zink in Schmelze geht. Am Boden 45 des Badbehälters 50 sammelt sich das flüssige Zink 71 und kann nach Erreichen eines gewissen Pegels durch Öffnen der Verschliessanordnung 61 in den Sammelbehälter 66 entleert werden.

Am Ende des Badbehälters 50 gelangen die nunmehr im wesentlichen aus Kupfer und Aluminium bestehenden Gemengteile 6 in den Schaufelbereich der an der Verlängerung 47 des Zuführrohrs 34 befestigten Schaufel 48, werden von dieser angehoben und gelangen mit weiterer Drehung des Zuführrohrs 34 durch die in der Verlängerung 47 angeordnete Öffnung 49 wieder in das Innere der Verlängerung 47 des Zuführrohrs 34, und zwar vor die in Förderichtung gesehen erste Schneckenwindung der inneren Förderschnecke 54 und werden durch diese aus dem Innenraum des Badbehälters 50 befördert.

Sie gelangen nun in eine Zone noch höherer Temperatur, die der direkten Bestrahlung durch die Brennerflamme 58 ausgesetzt ist. Hier wird die Schmelztemperatur des Aluminiums erreicht, so dass dieses ausschmilzt und die Verlängerung 47 des Zuführrohrs 34 durch eine mit einem Sieb 56 abgedeckte Öffnung 57 verlässt und sich in einem Sammelbehälter 62 auffangen lässt. Die jetzt noch fest verbleibenden Gemengteile bestehen zu ca. 80% aus Kupfer und werden in einen nicht dargestellten Sammelbehälter am Ende der Verlängerung 47 des Zuführrohrs 34 ausgetragen. Das dort erhaltene hochwertige Material kann je nach beabsichtigter Verwendung weiterverarbeitet werden.

Die Erfindung ist nicht auf das dargestellte Ausführungsbeispiel beschränkt. So wäre es insbesondere nicht notwendig, als Wärmebad ein Ölbad zu verwenden, sondern es könnte statt dessen – und in vielen Fällen ist dies sogar der vorteilhaftere Weg – als Wärmebad jeweils eine Schmelze des zu selektierenden Metalls verwendet werden.

## Patentansprüche

1. Vorrichtung zum selektiven Abtrennen nicht ferromagnetischer Metalle aus einem Gemenge zerkleinerten metallischen Schrottes von nahezu einheitlicher Teilchengrösse mit einer Zuführeinrichtung, die in ein Wärmebad zum Ausschmelzen niedrigschmelzender Bestandteile führt und einer aus dem Wärmebad herausführenden Austragseinrichtung, dadurch gekennzeichnet, dass die Austragsöffnung (31) der aus dem Wärmebad (3), dessen Temperatur oberhalb des Schmelzpunktes von Blei liegt, herausführenden, als Schneckenfördereinrichtung ausgebildeten Austragseinrichtung (4, 7, 9, 11) über eine Zuführleitung (32) mit einem dem ersten Wärmebad (3) nachgeschalteten Wärmebad (43), dessen Temperatur oberhalb des Schmelzpunktes von Zink liegt, verbunden ist, dass in dem Wärmebad (43) Zuführ- und als Schneckenfördereinrichtung ausgebildete Austragseinrichtungen (80) angeordnet sind, und dass eine weitere Fördereinrichtung (54) vorgesehen ist, die die restlichen festen Gemengebestandteile durch eine Wärmezone (81), deren Temperatur oberhalb des Schmelzpunktes von Aluminium liegt, fördert.

2. Vorrichtung nach Anspruch 1, dadurch gekennzeichnet, dass die Zuführeinrichtung (2) eine Rütteleinrichtung (5) aufweist.

3. Vorrichtung nach Anspruch 1 bis 2, dadurch gekennzeichnet, dass als Zuführ- und Austragseinrichtung (4, 7, 9, 11) ein in das erste Wärmebad (3) führendes, mit Öffnungen (11) versehenes, endseitig geschlossenes Rohr (4) vorgesehen ist, dessen Aussenmantel (68) ein Schneckenband (7) trägt, das in einem Durchtrittsöffnungen (11) aufweisenden endseitig geschlossenem Aussenrohr (9) verläuft.

4. Vorrichtung nach Anspruch 3, dadurch gekennzeichnet, dass das Rohr (4) vor der ersten Schneckenwindung (10) des Schneckenbandes (7) Öffnungen (11) aufweist.

5. Vorrichtung nach Anspruch 1 bis 4, dadurch gekennzeichnet, dass im Endbereich des Aussenrohres (9) ein Auslass (14) für das geschmolzene Blei vorgesehen ist.

6. Vorrichtung nach den Ansprüchen 1 bis 5, dadurch gekennzeichnet, dass für das aus dem Ölbad (3) abdampfende Öl ein Kondensator (27) und eine den Kreislauf schliessende Rückleitung (28) und für die verbleibende Badabluft eine Zuleitung (29) zum Brenner (25) vorgesehen ist.

7. Vorrichtung nach Anspruch 6, dadurch gekennzeichnet, dass am Zuführkanal (2) vor dem Eintritt des Gutes (6) in das Rohr (4) eine durch die heissen Brennergase beheizte Vorwärmzone (30) angeordnet ist.

8. Vorrichtung nach Anspruch 1 bis 7, dadurch gekennzeichnet, dass in der in dem Bad (43) vorgesehenen Zuführ- und Austragseinrichtung (80) die zuführende Schnecke (36) konzentrisch zu einer austragenden Schnecke (54) angeordnet ist, wobei beide Schnecken vorzugsweise mit einem gemeinsamen Antrieb verbunden sind.

9. Vorrichtung nach Anspruch 8, dadurch gekennzeichnet, dass für die Zuführ- und Austragseinrichtung (80) ein eine erste Förderschnecke (36) aufnehmendes Zuführrohr (34) mit einer Eintrittsöffnung (33) und einer an der Rohrunterseite angeordneten Austrittsöffnung (40) zur Badflüssigkeit (43) , eine weitere, wenigstens teilweise in die Badflüssigkeit (43) eingreifende, am Aussenmantel (42) des Zuführrohrs (34) angeordnete zweite äussere Förderschnecke (44) zur Weiterbewegung des Gemenges (6) im Bad, eine Austragsanordnung für das Gemenge (6) aus dem Bad ins Innere der Verlängerung (47) des Zuführrohrs (34) und eine weitere Schnecke (54) im Inneren der Verlängerung (47) des Zuführrohrs (34) zur Weiterbeförderung des Gemenges (6) vorgesehen sind.

10. Vorrichtung nach Anspruch 9, dadurch gekennzeichnet, dass die Austragsanordnung (80) wenigstens eine an der Verlängerung (47) des Zuführrohrs (34) befestigte, sich etwa in Längsrichtung des Zuführrohrs (34) erstreckende Schaufel (48) und eine in Drehrichtung D gesehen oberhalb derselben angeordnete Öffnung (49) umfasst.

11. Vorrichtung nach Anspruch 1 bis 10, dadurch gekennzeichnet, dass der Brenner (59), der das Wärmebad (43) beheizt, so angeordnet ist, dass im Bereich der aus dem Wärmebad (43) herausführenden Verlängerung (47) des Zuführrohrs (34) eine Zone (81) mit einer Temperatur, die oberhalb des Schmelzpunktes von Aluminium liegt, entsteht.

## Claims

1. A device for the selective separation of non-ferromagnetic metals from a mixture of crushed metal scrap of approximately uniform particle size, comprising a feed device leading to a heated bath for melting out constituents of low melting point and a discharge device leading out of the heated bath, characterised in that the discharge opening (31) of the discharge device (4, 7, 9, 11), which is in the form of a worm conveyor and leads out of the heated bath (3) of which the temperature is above the melting point of lead, is connected via a feed conduit (32) with a heated bath (43) which is located beyond the first heated bath (3) and the temperature of which is above the melting point of zinc, that a feed device, and a discharge device in the form of a worm conveyor (80), are arranged in the heated bath (43), and that a further conveyor device (54) is provided which conveys the remaining solid constituents of the mixture through a heated zone (81), the temperature of which is above the melting point of aluminium.

2. A device as claimed in Claim 1, characterised in that the feed device (2) has a vibrating device (5).

3. A device as claimed in Claim 1 or 2, characterised in that the feed and discharge device (4, 7, 9, 11) consists of a pipe (4) which leads into the first heated bath (3), and is closed at one end and the outer periphery (68) of which carries a worm conveyor (7) running in an outside pipe (9) which is closed at one end and encompassing the openings (11).

4. A device as claimed in Claim 3, characterised in that the pipe (4) has openings (11) in front of the first worm turn (10) of the worm conveyor (7).

5. A device as claimed in Claim 1 to 4, characterised in that an outlet (14) for the molten lead is provided in the region of an end of the outside pipe (9).

6. A device as claimed in Claims 1 to 5, characterised in that a condenser (27) and a return pipe (28) closing the circuit are provided for the oil vaporised from the oil bath (3), and that a feed pipe (29) to the burner (25) is provided for the remaining air discharged from the bath.

7. A device as claimed in Claim 6, characterised in that a pre-heating zone (30) heated by the hot gases from the burner is located on the feed duct (2) in front of the entry for the material (6) into the pipe (4).

8. A device as claimed in Claim 1 to 7, characterised in that in the feed and discharge device (80) provided in the bath (43), the feed worm (36) is fitted concentrically to a discharge worm (54), both worms preferably being connected to a common drive.

9. A device as claimed in Claim 8, characterised in that the feed and discharge device (80) comprises a feed pipe (34) which contains a first conveyor worm (36) and has an inlet opening (33) and an outlet opening (40) located on the underside of the pipe and leading to the liquid in the bath (43); a second, external conveyor worm (44) which is at least partly immersed in the liquid (43) in the bath and is located on the outer casing (42) of the feed pipe (34) for onward movement of the mixture (6) in the bath; an arrangement for discharging the mixture (6) out of the bath into the interior of the extension (47) to the feed pipe (34);

and a further worm (54) inside the extension (47) of the feed pipe (34) for the onward movement of the mixture (6).

10. A device as claimed in Claim 9, characterised in that that the discharge arrangement (80) comprises at least one blade (48) which is secured to the extension (47) of the feed pipe (34) and which extends approximately longitudinally of the feed pipe (34) and an opening (49) located in the direction of rotation D above it.

11. A device as claimed in Claim 1 to 10, characterised in that the burner (59) which heats the heated bath (43) is so arranged that a zone (81) with a temperature lying above the melting point of aluminium is formed in the vicinity of the extension (47) to the feed pipe (34) leading out of the heated bath (43).

**Revendications**

1. Dispositif de séparation sélective de métaux non ferromagnétiques à partir d'un mélange de rebuts métalliques réduits en petits fragments de dimensions approximativement uniformes, comportant un dispositif d'alimentation qui introduit les éléments composants dans un bain chaud pour la fusion des éléments composants qui ont le point de fusion le plus bas, et un dispositif d'évacuation hors du bain, caractérisé par le fait que l'ouverture d'évacuation (31) du dispositif d'évacuation (4, 7, 9, 11), agencé sous la forme d'un dispositif transporteur à vis sans fin pour l'évacuation hors du bain chaud (3), dont la température est supérieure au point de fusion du plomb, est reliée par une canalisation d'alimentation (32) à un autre bain chaud (43) dont la température est supérieure au point de fusion du zinc, et qui est disposé à la suite du premier bain chaud (3); que des dispositifs (80) d'alimentation et d'évacuation agencés sous forme de dispositifs transporteurs à vis sans fin sont prévus dans le bain chaud (43) et qu'un autre dispositif d'entraînement (54) est prévu, pour entraîner les éléments composants solides restants à travers une zone chaude (81) dont la température est supérieure au point de fusion de l'aluminium.

2. Dispositif selon la revendication 1, caractérisé par le fait que le dispositif d'alimentation (2) comprend un dispositif à secouer (5).

3. Dispositif selon la revendicaction 1 ou 2, caractérisé par le fait qu'un tube (4) fermé à une extrémité est prévu comme dispositif d'alimentation et d'évacuation (4, 7, 9, 11) ce tube étant pourvu d'ouvertures (11) et débouchant dans le premier bain (3), lequel tube comporte sur son enveloppe externe (68) une bande hélicoïdale sans fin (7) mobile dans un tube externe (9) fermé à une extrémité et présentant des ovuertures de passage (12).

4. Dispositif selon la revendication 3, caractérisé par le fait que le tube (4) présente des ouvertures (11) en avant de la première spire (10) de la bande hélicoïdale (7).

5. Dispositif selon l'une des revendications 1 à 4, caractérisé par le fait qu'une sortie (14) pour le plomb fondu est prévue dans la zone d'extrémité du tube externe (9).

6. Dispositif selon l'une des revendications 1 à 5, caractérisé par le fait qu'un condenseur (27) et une conduite de retour (28) fermant le circuit sont prévus pour l'huile qui s'évapore du bain d'huile (3), et qu'une conduite d'amenée (29) allant à un brûleur (25) est prévue pour l'air d'échappement restant du bain.

7. Dispositif selon la revendication 6, caractérisé par le fait qu'une zone de préchauffage (30) chauffée par les gaz chauds du brûleur est disposée sur le canal d'alimentation (2) avant l'entrée de la matière (6) dans le tube (4).

8. Dispositif selon l'une quelconque des revendications 1 à 7, caractérisé par le fait que, dans le dispositif d'alimentation et d'évacuation (80) prévu dans le bain (43) la vis sans fin (36) est disposée concentriquement à une vis sans fin (54) d'évacuation, les deux vis sans fin étant, de préférence, reliées à un dispositif d'entraînement commun.

9. Dispositif selon la revendication 8, caractérisé par le fait que, pour le dispositif d'alimentation et d'évacuation (80), il est prévu: un tube d'alimentation (34) recevant une première vis transporteuse sans fin (36) et muni d'une ouverture d'entrée (33) et d'une ouverture de sortie (40) située à la partie inférieure du tube vers le fluide du bain (43); une seconde vis transporteuse sans fin (44) externe, pénétrant au moins partielleemnt dans le fluide du bain (43) et disposée sur l'enveloppe externe (42) du tube d'alimentation (34), pour la poursuite du mouvement du mélange (6) dans le bain; un dispositif d'évacuation du mélange (6) hors du bain, placé à l'intérieur du prolongement (47) du tube d'alimentation (34), et une autre vis sans fin (54) placée à l'intérieur du prolongement (47) du tube d'alimentation (34) en vue de la poursuite du refoulement du mélange (6).

10. Dispositif selon la revendication 9, caractérisé par le fait que le dispositif d'évacuation (80) comporte au moins une palette (48) fixée au prolongement (47) du tube d'alimentation (34) et s'étendant approximativement dans la direction longitudinale du tube d'alimentation (34), et une ouverture (49) disposée, vue dans la direction de la rotation (D), au-dessus de ladite palette.

11. Dispositif selon l'une des revendications 1 à 10, caractérisé par le fait que le brûleur (59) qui chauffe le bain (43) est disposé de manière que dans la région du prolongement (47) du tube d'alimentation (34) sortant du bain chaud (43) soit constituée une zone (81) dont la température est supérieure au point de fusion de l'aluminium.

FIG. 1

**FIG. 2**

**FIG. 3**